# EUROPÄISCHE PATENTSCHRIFT

(11) **EP 3 369 167 B1**
(45) Veröffentlichungstag und Bekanntmachung des Hinweises auf die Patenterteilung: **30.06.2021**
(21) Anmeldenummer: 16788512.8
(22) Anmeldetag: 28.10.2016
(51) Int. Cl.: H02M 7/5387, H02M 3/158

(54) **NETZRÜCKSPEISEEINHEIT UND ELEKTRISCHES ANTRIEBSSYSTEM**
NETWORK FEEDBACK UNIT AND ELECTRICAL DRIVE SYSTEM
UNITÉ DE RÉCUPÉRATION D'ÉNERGIE ET SYSTÈME D'ENTRAÎNEMENT ÉLECTRIQUE

(30) Priorität: 30.10.2015 DE 102015221359
(43) Veröffentlichungstag der Anmeldung: 05.09.2018
(73) Patentinhaber: Schmidhauser AG, 8590 Romanshorn (CH)
(72) Erfinder: SCHNEGGENBURGER, Christof, 8594 Güttingen (CH); SCHEKULIN, Dirk, CH-9056 Gais (CH)
(74) Vertreter: Patentanwälte Ruff, Wilhelm, Beier, Dauster & Partner mbB
(86) Internationale Anmeldenummer: PCT/EP2016/076068
(87) Internationale Veröffentlichungsnummer: WO 2017/072297

(56) Entgegenhaltungen:
- DE-A1-102005 047 373
- DE-A1-102014 109 009

## Beschreibung

Die Erfindung betrifft eine Netzrückspeiseeinheit und ein elektrisches Antriebssystem.

Der Erfindung liegt die Aufgabe zugrunde, eine Netzrückspeiseeinheit und ein elektrisches Antriebssystem zur Verfügung zu stellen, mittels derer Energie, beispielsweise Bremsenergie, zuverlässig und mit hohem Wirkungsgrad in ein Netz eingespeist bzw. rückgespeist werden kann.

Die Druckschrift DE 10 2005 047 373 A1 offenbart in Figur 8 einen Netzankopplungsumrichter für eine Fotovoltaikanlage, umfassend zwei ausgangsseitig parallel geschalteten Tiefsetzvorrichtungen, die mit einem Wechselrichter verbunden sind.

Die Erfindung löst diese Aufgabe durch eine Netzrückspeiseeinheit nach Anspruch 1 und ein elektrisches Antriebssystem nach Anspruch 8.

Die Netzrückspeiseeinheit ist dazu ausgebildet, elektrische Energie aus einem Zwischenkreis in ein Drehstromnetz einzuspeisen.

Die Netzrückspeiseeinheit weist eine Tiefsetzstellereinheit auf. Die Tiefsetzstellereinheit weist einen ersten Tiefsetzsteller und einen zweiten Tiefsetzsteller auf.

Nachfolgend wird die Erfindung für zwei Tiefsetzsteller beschrieben. Der erste Tiefsetzsteller und der zweite Tiefsetzsteller sind eingangsseitig und ausgangsseitig parallel geschaltet und jeweils eingangsseitig mit dem Spannungszwischenkreis elektrisch gekoppelt.

Die Netzrückspeiseeinheit weist weiter einen Wechselrichter auf, der eingangsseitig mit einem Ausgang der Tiefsetzstellereinheit elektrisch gekoppelt ist und der ausgangsseitig mit dem Drehstromnetz elektrisch gekoppelt ist. Der Wechselrichter ist typisch ein strom- oder spannungsgespeister Kommutator.

Die Netzrückspeiseeinheit weist weiter mindestens einen Filterkondensator auf, der am Ausgang der Tiefsetzstellereinheit angeordnet ist. Alternativ oder zusätzlich kann/können ein oder mehrere Filterkondensatoren am Ausgang des Wechselrichters angeordnet sein.

Die Netzrückspeiseeinheit weist weiter eine Reglereinheit auf, beispielsweise in Form eines Mikroprozessors oder FPGAs und zugehöriger Hard- und Software, die dazu ausgebildet ist, in Abhängigkeit von einem Filterkondensator-Strom, d.h. einem durch den Filterkondensator fließenden Strom, den ersten Tiefsetzsteller und den zweiten Tiefsetzsteller derart anzusteuern bzw. zu betreiben, dass der erste Tiefsetzsteller und der zweite Tiefsetzsteller im zeitlichen Mittel zu gleichen Teilen zu einem Ausgangsstrom der Tiefsetzstellereinheit beitragen. Im Idealfall werden der erste Tiefsetzsteller und der zweite Tiefsetzsteller derart angesteuert, dass der erste Tiefsetzsteller und der zweite Tiefsetzsteller im zeitlichen Mittel jeweils in etwa die Hälfte des Ausgangsstroms der Tiefsetzstellereinheit liefern.

Die Tiefsetzsteller werden jeweils basierend auf einer Pulsweitenmodulation (auch als Pulsbreitenmodulation bezeichnet) betrieben, wobei hierzu herkömmlich ein Tastverhältnis innerhalb einer jeweiligen (PWM-) Periode der Pulsweitenmodulation eingestellt wird, wobei das Tastverhältnis beispielsweise einen Ausgangsstrom des jeweiligen Tiefsetzstellers beeinflusst. Die Tiefsetzsteller werden innerhalb einer jeweiligen Periode versetzt betrieben. Die beiden Tiefsetzsteller werden um 180 Grad versetzt getaktet. Die Reglereinheit kann für diesen Fall dazu ausgebildet sein, in Abhängigkeit von dem Filterkondensator-Strom den ersten Tiefsetzsteller und den zweiten Tiefsetzsteller derart anzusteuern bzw. zu betreiben, dass der erste Tiefsetzsteller und der zweite Tiefsetzsteller im zeitlichen Mittel über eine jeweilige Periode der Pulsweitenmodulation zu gleichen Teilen zu einem Ausgangsstrom der Tiefsetzstellereinheit beitragen.

Der Filterkondensator ist am Ausgang der Tiefsetzstellereinheit angeordnet und ist beispielsweise zwischen Ausgangsanschlusspole der Tiefsetzstellereinheit eingeschleift bzw. geschaltet. Die Netzrückspeiseeinheit weist einen im Filterstrompfad angeordneten Stromsensor aufweisen, der dazu ausgebildet ist, den Filterkondensator-Strom zu messen.

Zusätzlich oder alternativ weist die Netzrückspeiseeinheit eine Anzahl von Filterkondensatoren am Ausgang des Wechselrichters auf, beispielsweise genau drei Filterkondensatoren. Die Netzrückspeiseeinheit weist eine entsprechende bzw. gleiche Anzahl von Stromsensoren auf, wobei die Stromsensoren jeweils dazu ausgebildet sind, einen zugehörigen Filterkondensator-Strom zu messen. Ein erster Stromsensor kann beispielsweise einen ersten Filterkondensator-Strom messen, ein zweiter Stromsensor kann beispielsweise einen zweiten Filterkondensator-Strom messen und ein dritter Stromsensor kann beispielsweise einen dritten Filterkondensator-Strom messen.

Die Reglereinheit kann einen Zwischenkreisspannungsregler aufweisen, der dazu ausgebildet ist, eine Zwischenkreisspannung auf einen Sollwert hin zu regeln. Der Zwischenkreisspannungsregler kann einen Ausgangsstrom-Sollwert für die Tiefsetzstellereinheit als Stellgröße ausgeben. Die Reglereinheit kann weiter einen Tiefsetzstellereinheit-Stromregler aufweisen, der dazu ausgebildet ist, in Abhängigkeit von einer Differenz zwischen dem Ausgangsstrom-Sollwert und dem Ausgangsstrom (-Istwert) der Tiefsetzstellereinheit und zusätzlich in Abhängigkeit von einem Symmetriersignal ein erstes Strom-Stellsignal und ein zweites Strom-Stellsignal zu erzeugen. Das erste Strom-Stellsignal bestimmt hierbei einen Ausgangsstrom des ersten Tiefsetzstellers und das zweite Strom-Stellsignal bestimmt entsprechend einen Ausgangsstrom des zweiten Tiefsetzstellers. Die Reglereinheit kann eine Symmetriersignal-Erzeugungseinheit aufweisen, die dazu ausgebildet ist, das Symmetriersignal in Abhängigkeit von dem Filterkondensator-Strom derart zu erzeugen, dass das Symmetriersignal davon abhängig ist, zu welchen Anteilen der erste Tiefsetzsteller und der zweite Tiefsetzsteller zum Ausgangsstrom der Tiefsetzstellereinheit beitragen.

Der erste Tiefsetzsteller und der zweiten Tiefsetzsteller können jeweils mindestens ein Halbleiterschaltmittel, insbesondere genau zwei Halbleiterschaltmittel, aufweisen. Die Reglereinheit kann eine erste PWM-Erzeugungseinheit aufweisen, wobei die erste PWM-Erzeugungseinheit dazu ausgebildet ist, in Abhängigkeit von dem ersten Strom-Stellsignal ein erstes pulsweitenmoduliertes Ansteuersignal für das mindestens eine Halbleiterschaltmittel des ersten Tiefsetzstellers zu erzeugen. Die Reglereinheit kann weiter eine zweite PWM-Erzeugungseinheit aufweisen, wobei die zweite PWM-Erzeugungseinheit dazu ausgebildet ist, in Abhängigkeit von dem zweiten Strom-Stellsignal ein zweites pulsweitenmoduliertes Ansteuersignal für das mindestens eine Halbleiterschaltmittel des zweiten Tiefsetzstellers in Abhängigkeit von dem zweiten Strom-Stellsignal zu erzeugen. Die Reglereinheit kann weiter einen Stromsensor aufweisen, der dazu ausgebildet ist, den Filterkondensator-Strom zu messen. Die Symmetriersignal-Erzeugungseinheit kann einen mit dem Stromsensor wirkverbundenen Komparator aufweisen, der dazu ausgebildet ist, ein Komparatorsignal mit einem ersten logischen Zustand, beispielsweise Eins, auszugeben, wenn der Filterkondensator-Strom größer als ein oberer Schwellenwert ist, und das Komparatorsignal mit einem zweiten logischen Zustand, beispielsweise Null, auszugeben, wenn der Filterkondensator-Strom kleiner als ein unterer Schwellenwert ist. Der obere und der untere Schwellenwert können identisch sein oder sich unterscheiden, um eine Hysterese zu implementieren. Die Symmetriersignal-Erzeugungseinheit kann weiter eine Logikeinheit mit mindestens einem Logikgatter, mindestens einem Integrierglied und/oder mindestens einem Abtastglied aufweisen, wobei die Logikeinheit mit dem Komparatorsignal und den pulsweitenmodulierten Ansteuersignalen beaufschlagt ist und dazu ausgebildet ist, das Symmetriersignal in Abhängigkeit von dem Komparatorsignal und den pulsweitenmodulierten Ansteuersignalen zu erzeugen.

Der erste Tiefsetzsteller und der zweite Tiefsetzsteller können jeweils eine erste Kommutierungszelle und ein zweite Kommutierungszelle aufweisen, wobei die ersten Kommutierungszellen einen Kondensator, eine Diode und ein Halbleiterschaltmittel aufweisen, wobei die zweiten Kommutierungszellen entsprechend einen Kondensator, eine Diode und ein Halbleiterschaltmittel aufweisen, wobei der Kondensator der ersten Kommutierungszellen und der Kondensator der zweiten Kommutierungszellen in Reihe zwischen Eingangsanschlusspole der Tiefsetzstellereinheit eingeschleift sind, wobei die Reglereinheit eine Spannungs-Symmetriereinheit aufweist, die dazu ausgebildet ist, das Halbleiterschaltmittel der ersten Kommutierungszellen und das Halbleiterschaltmittel der zweiten Kommutierungszellen derart anzusteuern, dass sich an dem Kondensator der ersten Kommutierungszellen und dem Kondensator der zweiten Kommutierungszellen identische Spannungen einstellen.

Die Netzrückspeiseeinheit kann eine Ausgangsstrom-Bestimmungseinheit aufweisen, die dazu ausgebildet ist, in Abhängigkeit von dem Filterkondensator-Strom bzw. den Filterkondensator-Strömen und in Abhängigkeit von Phasenausgangsströmen, die mittels des Wechselrichters in das Drehstromnetz eingespeist bzw. eingeprägt werden, den Ausgangsstrom der Tiefsetzstellereinheit zu ermitteln bzw. zu synthetisieren.

Die Ausgangsstrom-Bestimmungseinheit kann eine Auswahleinheit aufweisen, die mit den Phasenausgangsströmen und einem Auswahlsignal beaufschlagt ist und die dazu ausgebildet ist, in Abhängigkeit von dem Auswahlsignal einen einzelnen der Phasenausgangsströme auszugeben. Weiter kann die Ausgangsstrom-Bestimmungseinheit einen Summierer aufweisen, der mit dem Filterkondensator-Strom und dem von der Auswahleinheit ausgegebenen Phasenausgangsstrom beaufschlagt ist und der dazu ausgebildet ist, den Filterkondensator-Strom und den von der Auswahleinheit ausgegebenen Phasenausgangsstrom zu summieren, wobei die sich so ergebende Summe den Ausgangsstrom darstellt.

Alternativ kann die Ausgangsstrom-Bestimmungseinheit eine erste Auswahleinheit aufweisen, die mit den Phasenausgangsströmen und einem Auswahlsignal beaufschlagt ist und die dazu ausgebildet ist, in Abhängigkeit von dem Auswahlsignal einen einzelnen der Phasenausgangsströme auszugeben, und eine zweite Auswahleinheit aufweisen, die mit den Filterkondensator-Strömen und dem Auswahlsignal beaufschlagt ist und die dazu ausgebildet ist, in Abhängigkeit von dem Auswahlsignal einen einzelnen der Filterkondensator-Ströme auszugeben. Weiter kann die Ausgangsstrom-Bestimmungseinheit einen Summierer aufweisen, der mit dem von der ersten Auswahleinheit ausgegebenen Phasenausgangsstrom und mit dem von der zweiten Auswahleinheit ausgegebenen Filterkondensator-Strom beaufschlagt ist und der dazu ausgebildet ist, den ausgewählten Phasenausgangsstrom und den ausgewählten Filterkondensator-Strom zu summieren, wobei die sich ergebende Summe den Ausgangsstrom darstellt.

Das elektrisches Antriebssystem weist auf: mindestens einen elektrischen Antrieb, mindestens einen Frequenzumrichter zum Ansteuern des elektrischen Antriebs, wobei der Frequenzumrichter einen Zwischenkreis aufweist und/oder mit einem Zwischenkreis elektrisch gekoppelt ist, und eine oben beschriebene mit dem Zwischenkreis und einem Drehstromnetz gekoppelte Netzrückspeiseeinheit.

Die Erfindung wird nachfolgend unter Bezugnahme auf die Zeichnungen detailliert beschrieben. Hierbei zeigen:
- Fig. 1: ein Schaltbild einer Netzrückspeiseeinheit gemäß einer ersten Ausführungsform,
- Fig. 2: ein Schaltbild einer Netzrückspeiseeinheit gemäß einer weiteren Ausführungsform,
- Fig. 3: ein hoch schematisches Blockschaltbild einer Reglereinheit der in den Figuren 1 und 2 gezeigten Netzrückspeiseeinheit,
- Fig. 4: ein Blockschaltbild einer prinzipiellen Struktur der in Fig. 3 gezeigten Reglereinheit,
- Fig. 5: ein Blockschaltbild einer Ausgangsstrom-Bestimmungseinheit der in Fig. 1 gezeigten Netzrückspeiseeinheit,
- Fig. 6: ein Blockschaltbild einer Ausgangsstrom-Bestimmungseinheit der in Fig. 2 gezeigten Netzrückspeiseeinheit,
- Fig. 7: ein Blockschaltbild einer Einheit zur Synthese von Istwerten einer Zwischenkreisspannung,
- Fig. 8a-c: einen Komparator und zugehörige Signalverläufe und
- Fig. 9: ein Blockschaltbild einer Symmetriersignal-Erzeugungseinheit.

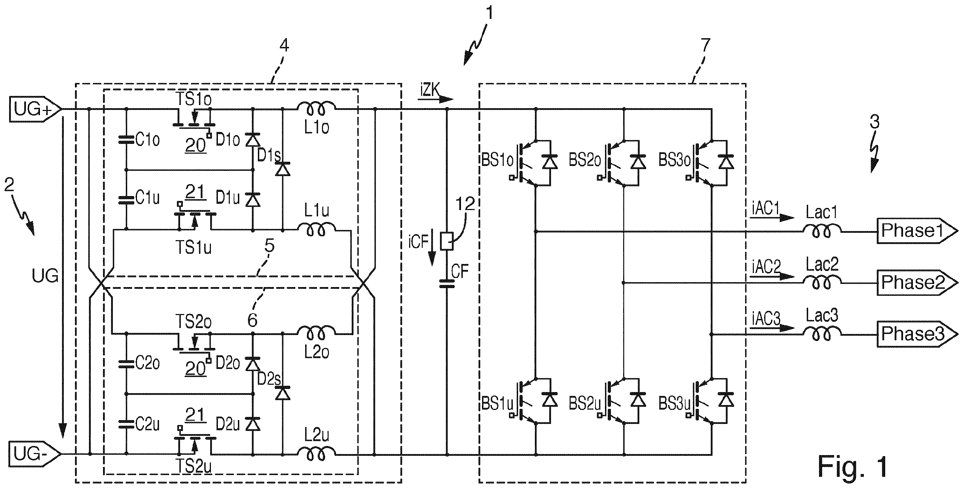

Fig. 1 zeigt ein Schaltbild einer Netzrückspeiseeinheit 1 gemäß einer ersten Ausführungsform. Die Netzrückspeiseeinheit 1 ist dazu ausgebildet, überschüssige elektrische Energie aus einem Zwischenkreis 2 in ein Drehstromnetz 3 einzuspeisen. Ein Überschuss an elektrischer Energie kann beispielsweise im Bremsbetrieb bei Hochregallagerantrieben anfallen.

Die Netzrückspeiseeinheit 1 weist eine Tiefsetzstellereinheit 4 mit einem ersten Tiefsetzsteller 5 und einem zweiten Tiefsetzsteller 6 auf, wobei der erste Tiefsetzsteller 5 und der zweite Tiefsetzsteller 6 parallel geschaltet sind und jeweils eingangsseitig mit dem Spannungszwischenkreis 2 elektrisch gekoppelt sind.

Die Netzrückspeiseeinheit 1 weist weiter einen Wechselrichter 7 auf, der eingangsseitig mit einem Ausgang der Tiefsetzstellereinheit 4 elektrisch gekoppelt ist und der ausgangsseitig mit dem Drehstromnetz 3 elektrisch gekoppelt ist.

Der erste Tiefsetzsteller 5 und der zweite Tiefsetzsteller 6 weisen jeweils eine erste Kommutierungszelle 20 und ein zweite Kommutierungszelle 21 auf, wobei die ersten Kommutierungszellen 20 einen Kondensator C1o bzw. C2o, eine Diode D1o bzw. D2o und ein Halbleiterschaltmittel TS1o bzw. TS2o aufweisen. Die zweiten Kommutierungszellen 21 weisen jeweils entsprechend einen Kondensator C1u bzw. C2u, eine Diode D1u bzw. D2u und ein Halbleiterschaltmittel TS1u bzw. TS2u auf. Der jeweilige Kondensator C1o bzw. C2o der ersten Kommutierungszellen 20 und der jeweilige Kondensator C1u bzw. C2u der zweiten Kommutierungszellen 21 sind in Reihe zwischen Eingangsanschlusspole UG+, UG- der Tiefsetzstellereinheit 4 eingeschleift.

Mit anderen Worten zeigt Fig. 1 eine Topologie mit zwei parallel geschalteten symmetrischen Tiefsetzstellern 4 und 5 und einem nachgeschalteten spannungsgespeisten Wechselrichter bzw. Kommutator (IGBT-Brücke) 7. Die symmetrischen Tiefsetzsteller 5 und 6 weisen jeweils eine obere Kommutierungszelle 20 aus Transistorschalter TS1o, Diode D1o und Kondensator C1o bzw. Transistorschalter TS2o, Diode D2o und Kondensator C2o und eine untere Kommutierungszelle 21 aus Transistorschalter TS1u, Diode D1u und Kondensator C1u bzw. Transistorschalter TS2u, Diode D2u und Kondensator C2u auf.

Dioden D1s bzw. D2s dienen zur Verlustreduktion im Freilauffall und sind derart dimensioniert, dass diese einen kleineren Spannungsabfall als die beiden seriell geschalteten Dioden der unteren und oberen Kommutierungszellen 20 bzw. 21 aufweisen.

Induktivitäten L1o, L1u, L2o, L2u bilden zusammen mit den Kommutierungszellen 20, 21 die jeweiligen Tiefsetzsteller, deren Ausgang einen Stromzwischenkreis bildet. Dieser ist an eine Transistorbrücke 7 (z.B. aus IGBTs) mit oberen Brückenschaltern BSio und unteren Brückenschaltern BSiu sowie an den Filterkondensator CF angeschlossen. Ausgänge der Transistorbrücke 7 sind über drei weitere Induktivitäten Laci an das Wechselstromnetz 3 angeschlossen. Die Induktivitäten bilden zusammen mit dem Kondensator CF die Struktur eines T-Filters.

Die Netzrückspeiseeinheit 1 weist einen im Filterstrompfad angeordneten Stromsensor 12 auf, der einen Filterkondensator-Strom iCF misst.

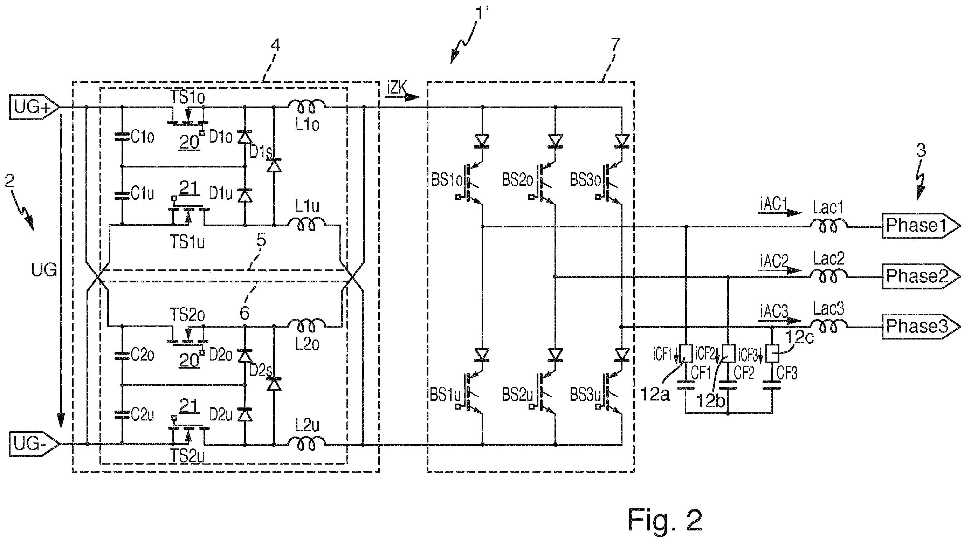

Fig. 2 zeigt eine Variante der in Fig. 1 gezeigten Topologie mit einem stromgespeisten Wechselrichter bzw. Kommutator 7, bei dem die Brücke mit rückwärtssperrenden Transistoren realisiert ist und die Filterkapazität in Form von drei Filterkondensatoren CF1, CF2, CF3 auf die AC-Seite verschoben ist. Grundsätzlich könnten die Filterkondensatoren CF1 bis CF3 auch in Dreieck-Anordnung verschaltet werden. Im Übrigen sei auf die Ausführungen zu Fig. 1 verwiesen.

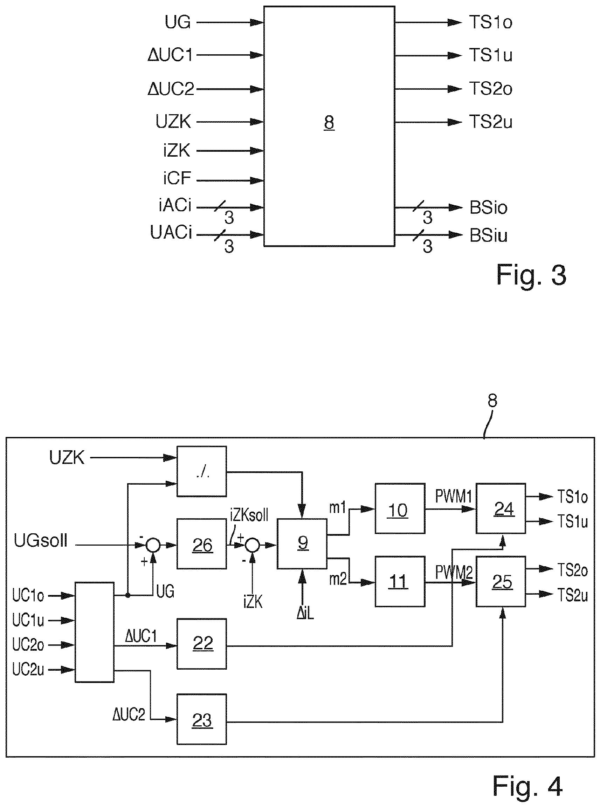

Fig. 3 zeigt ein schematisches Blockschaltbild einer Reglereinheit 8 der in den Figuren 1 oder 2 gezeigten Netzrückspeiseeinheit.

Die Reglereinheit 8 hat (unter anderem) folgende Eingangsgrößen und Ausgangsgrößen:
Eingangsgrößen der Reglereinheit 8 sind:

| | |
|---|---|
| UG | Zwischenkreisspannung (Eingangsspannung der Tiefsetzstellereinheit 4) |
| ΔUC1 | Differenz-Eingangsspannung des 1. Tiefsetzstellers 5 |
| ΔUC2 | Differenz-Eingangsspannung des 2. Tiefsetzstellers 6 |
| UZK | Ausgangsspannung der Tiefsetzstellereinheit 4 |
| iZK | Ausgangsstrom der Tiefsetzstellereinheit 4 |
| iACi | Phasenausgangsströme (3 Phasen) |
| UACi | Phasensternspannungen des Wechselstromnetzes (3 Phasen) |

Ausgangsgrößen der Reglereinheit 8 sind:

| | |
|---|---|
| TSio | Ansteuersignale für die Transistorschalter der oberen Kommutierungszellen 20 |
| TSiu | Ansteuersignale für die Transistorschalter der unteren Kommutierungszellen 21 |
| BSio | Ansteuersignale für obere Brückenschalter des Wechselrichters 7 |
| BSiu | Ansteuersignale für untere Brückenschalter des Wechselrichters 7 |

Die Brückenschalter BSio und BSiu werden anhand der natürlichen Kommutierungszeitpunkte direkt aus der Messung der Sternspannungen gesteuert. Insoweit sei auch auf den Stand der Technik verwiesen.

Fig. 4 zeigt ein Blockschaltbild einer prinzipiellen Struktur der in Fig. 3 gezeigten Reglereinheit 8.

Geregelt wird auf konstante Eingangsspannung bzw. Zwischenkreisspannung UG, beispielsweise 20V über einer gleichgerichteten Netzspannung, wobei je nach Regelungscharakteristik eine leistungsabhängige bleibende Regelabweichung möglich ist.

Ein Zwischenkreisspannungsregler 26 gibt einen Ausgangsstrom-Sollwert iZKsoll für die Tiefsetzstellereinheit 4 als Stellgröße aus. Die ausgegebene Stellgröße iZKsoll bildet den Sollwert für einen Tiefsetzstellereinheit-Stromregler 9.

Der Tiefsetzstellereinheit-Stromregler 9 erzeugt in Abhängigkeit von der Regeldifferenz iZKsoll - iZk und einem Symmetriersignal bzw. einer Stromsymmetriedifferenz ΔiL Stellgrößen in Form eines ersten Strom-Stellsignals m1 und eines zweiten Strom-Stellsignals m2, wobei das erste Strom-Stellsignal m1 einen Ausgangsstrom des ersten Tiefsetzstellers 5 beeinflusst und das zweite Strom-Stellsignal m2 einen Ausgangsstrom des zweiten Tiefsetzstellers 6 beeinflusst.

Die Strom-Stellsignale m1 und m2 dienen als Eingangssignale für PWM-Erzeugungseinheiten bzw. Modulatoren 10 bzw. 11, die als Ausgangssignale pulsbreitenmodulierte um 180 Grad versetzte Signale PWM1 und PWM2 liefern.

Eine Spannungs-Symmetriereinheit aufweisend die Funktionsblöcke 22, 23, 24, 25 erzeugt in Abhängigkeit von auftretenden Spannungsdifferenzen zwischen oberen und unteren Kommutierungszellen 20 und 21 Schaltsignale für den jeweiligen oberen und unteren Transistorschalter TSio bzw. TSiu der Tiefsetzsteller 5 und 6. Beispielsweise kann eine Spannungssymmetrierung dadurch erfolgen, dass eine differenzspannungsabhängige Verkürzung oder Verlängerung der jeweiligen Leitendphase des Transistorschalters TSio bzw. TSiu der oberen bzw. unteren Kommutierungszelle erfolgt.

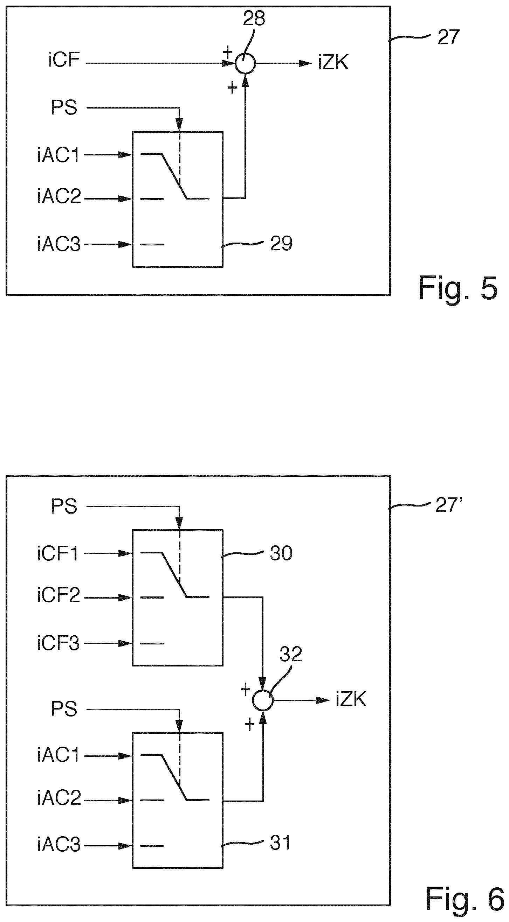

Fig. 5 zeigt ein Blockschaltbild einer Ausgangsstrom-Bestimmungseinheit 27 der in Fig. 1 gezeigten Netzrückspeiseeinheit 1. Der Ausgangsstrom iZK der Tiefsetzstellereinheit 4 wird aus einer Addition des gemessenen Kondensatorstroms iCF und eines aus den Phasenausgangsströmen iAC1, iAC2 und iAC3 selektierten Phasenausgangsstroms gewonnen. Die Addition wird mittels eines Summierers 28 durchgeführt. Die Phasenausgangsströme iAC1, iAC2 und iAC3 werden herkömmlich mittels nicht dargestellter Stromsensoren gemessen. Die Auswahl des Phasenausgangstroms erfolgt mittels einer Auswahleinheit 29, die mittels eines Phasenumschaltsignals PS angesteuert wird, das bereits für die Steuerung der Ausgangsbrücke 7 verwendet wird.

Die in Fig. 5 gezeigte Ausführungsform ist sehr kostengünstig realisierbar, da der Ausgangsstrom iZK nicht direkt mittels eines schnellen und entsprechend teuren Stromsensors gemessen wird, sondern indirekt mittels eines langsamen Stromsensors auf der AC-Seite und mittels des Stromsensors 12, der beispielsweise als Stromtransformator realisiert sein kann.

Fig. 6 zeigt ein Blockschaltbild einer alternativen Ausgangsstrom-Bestimmungseinheit 27' der in Fig. 2 gezeigten Netzrückspeiseeinheit 1'. Bezugnehmend auf die Ausgangsstrom-Bestimmungseinheit 27 aus Fig. 5 müssen sowohl die AC-Signale iACi als auch die Filterkondensator-Stromsignale iCFi ausgewählt werden, d.h. es sind zwei Auswahleinheiten 30 und 31 erforderlich.

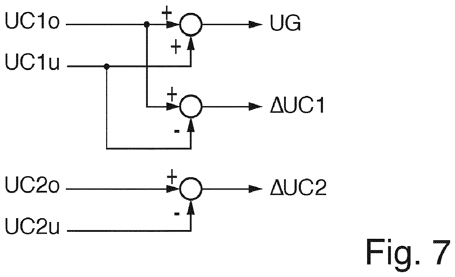

Fig. 7 zeigt die Erzeugung der Spannungssignale für die Reglereinheit 8 aus Figur 3 bzw. 4. Die Eingangsspannung UG könnte alternativ auch aus UC2o und UC2u oder auch direkt gemessen werden.

Die Tiefsetzsteller 5 und 6 sollten im Idealfall zu gleichen Anteilen zum Ausgangsstrom iZK der Tiefsetzstellereinheit 4 beitragen. Zu welchen Anteilen die Tiefsetzsteller 5 und 6 tatsächlich zum Ausgangsstrom iZK beitragen, wird in Abhängigkeit von dem Filterkondensator-Strom iCF bzw. einem der Filterkondensator-Ströme iCF1, iCF2, iCF3 ermittelt.

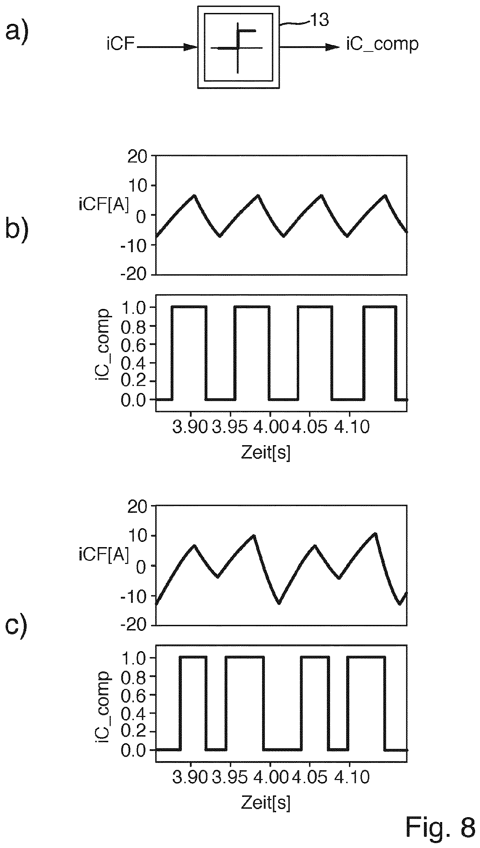

Fig. 8a zeigt einen mit dem Stromsensor 12 wirkverbundenen Komparator 13, der dazu ausgebildet ist, ein Komparatorsignal iC_comp mit einem logischen Zustand Eins auszugeben, wenn der Filterkondensator-Strom iCF größer als ein oberer Schwellenwert ist, und das Komparatorsignal iC_comp mit einem logischen Zustand Null auszugeben, wenn der Filterkondensator-Strom iCF kleiner als ein unterer Schwellenwert ist. Der Komparator 13 erzeugt folglich aus dem typischerweise dreieckförmigen gleichstromfreien Filterkondensator-Strom iCF ein Rechtecksignal.

Die Figuren 8b und 8c zeigen jeweils einen Verlauf des Filterkondensator-Stroms iCF und einen zugehörigen Verlauf des Komparatorsignals iC_comp für den Fall von zwei parallel geschalteten Tiefsetzstellern 5 und 6 und ideal versetzter Taktung (180 Grad) innerhalb einer PWM-Periode und unter der Voraussetzung, dass die Drosseln Lio und Liu der Tiefsetzsteller 5 bzw. 6 ein signifikantes Verhalten von L = L(i) aufweisen. D.h. bei zunehmenden Strom i steigt die Aussteuerung und die Induktivität L wird kleiner. Das ist bei den vorzugsweise verwendeten Pulverkerndrosseln (alle gängigen Materialmischungen) immer der Fall.

Bild 8b zeigt den Fall der vollständigen Symmetrie, d.h. die Tiefsetzsteller 5 und 6 tragen (im zeitlichen Mittel über eine PWM-Periode) zu gleichen Anteilen zum Ausgangsstrom iZK der Tiefsetzstellereinheit 4 bei. Beide Stromwelligkeiten sind innerhalb der PWM-Periode exakt gleich groß. Damit sind die Spannungszeitflächen der zugeordneten Rechtecksignale identisch.

Bild 8c zeigt den Fall von unterschiedlichen Stromanteilen der parallel geschalteten Tiefsetzsteller 5 und 6. Infolge der L(i)-Charakteristik hat derjenige Tiefsetzsteller mit dem größeren mittleren Strom eine kleinere Induktivität seiner Drossel und somit eine höhere Stromwelligkeit als der andere Tiefsetzsteller. Der Summenstrom ist der dargestellte Filterkondensator-Strom iCF. Nach dem Komparator 13 ergeben sich dann unterschiedliche Rechteckflächen, die für die Regelung der Stromsymmetrie vorteilhaft verwendet werden können.

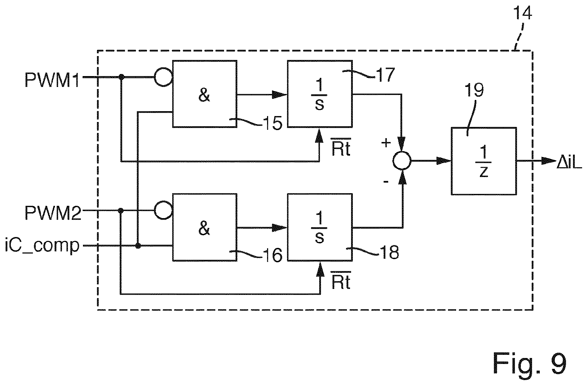

Fig. 9 zeigt eine mögliche Anordnung in Form einer Logikeinheit 14 zur Auswertung der Asymmetrie des Filterkondensator-Stroms iCF. Die Logikeinheit 14 weist zwei Logikgatter 15, 16, zwei Integrierglieder 17, 18 und ein Abtastglied 19 in der gezeigten Beschaltung auf, wobei die Logikeinheit 14 mit dem Komparatorsignal iC_comp und den pulsweitenmodulierten Ansteuersignalen PWM1, PWM2 beaufschlagt ist und dazu ausgebildet ist, das Symmetriersignal ΔiL in Abhängigkeit von dem Komparatorsignal iC_comp und den pulsweitenmodulierten Ansteuersignalen PWM1, PWM2 zu erzeugen.

Die Logik-Gatter 15, 16 verknüpfen das Komparatorsignal iC_comp logisch mit den entsprechenden PWM-Signalen PWM1 bzw. PWM2. Weiter erfolgt eine partielle Integration des Komparatorsignals iC_comp, indem die Integrierglieder 17 und 18 mit den fallenden Flanken der entsprechenden PWM-Signale PWM1 bzw. PWM2 zurückgesetzt werden. Die Differenz der integrierten Signale wird mittels des Abtastglieds 19 diskret abgetastet und dem Tiefsetzstellereinheit-Stromregler 9 als Stromsymmetriedifferenz ΔiL zugeführt. Ein geeigneter Regelkreis innerhalb des Tiefsetzstellereinheit-Stromreglers 9 korrigiert in Abhängigkeit vom Stromsymmetriedifferenz ΔiL die Stellsignale m1 und m2 derart, dass die beiden Tiefsetzsteller 5 und 6 nach einer Einregelzeit einen identischen Strom tragen.

Für die in Fig. 2 gezeigte Netzrückspeiseeinheit 1' ist die oben beschriebene Symmetriersignal-Erzeugungseinheit geeignet zu modifizieren.

Die gezeigten Ausführungsformen zeigen parallel geschaltete, symmetrisch aufgebaute Tiefsetzsteller 5 und 6 mit versetzter Taktung in Kombination mit einer IGBT-Brücke 7. Erfindungsgemäß können Potentialsprünge der Eingangsspannung bzw. Zwischenkreisspannung UG vermieden werden, so dass sich günstige EMV-Eigenschaften ergeben.

Erfindungsgemäß ist eine kostengünstige und dynamisch hochwertige Strommessung aus Kombination des wenig dynamischen Netzstromsignals iACi mit der schnellen AC-Messung des Kondensatorstroms iCF möglich. Damit sind alle Zustandsgrößen des T-Filters einfach messbar.

Erfindungsgemäß können Strom-Asymmetrien bei Verwendung mehrerer Tiefsetzsteller durch Auswertung des Verlaufs des Kondensatorstroms vermieden werden.

Erfindungsgemäß können Spannungs-Asymmetrien der oberen und unteren Kommutierungszellen 20 und 21 der Tiefsetzsteller 5 und 6 durch Auswertung der Spannungsdifferenz der Eingangskondensatoren ausgeregelt werden.

Es versteht sich, dass anstelle der beiden Tiefsetzsteller 5 und 6 auch mehr als zwei Tiefsetzsteller verwendet werden können.

## Patentansprüche

1. Netzrückspeiseeinheit (1, 1'), die dazu ausgebildet ist, elektrische Energie aus einem Spannungszwischenkreis (2) in ein Drehstromnetz (3) einzuspeisen, wobei die Netzrückspeiseeinheit (1, 1') aufweist:
- eine Tiefsetzstellereinheit (4) mit einem ersten Tiefsetzsteller (5) und einem zweiten Tiefsetzsteller (6), wobei der erste Tiefsetzsteller (5) und der zweite Tiefsetzsteller (6) parallel geschaltet sind und jeweils eingangsseitig mit dem Spannungszwischenkreis (2) elektrisch gekoppelt werden können,
wobei die Netzrückspeiseeinheit (1, 1') dazu ausgelegt ist, den ersten Tiefsetzsteller (5) und den zweiten Tiefsetzsteller (6) basierend auf einer Pulsweitenmodulation um 180 Grad versetzt zu takten,
- einen Wechselrichter (7), der eingangsseitig mit einem Ausgang der Tiefsetzstellereinheit (4) elektrisch gekoppelt ist und der ausgangsseitig mit dem Drehstromnetz (3) elektrisch gekoppelt werden kann,
- einen Filterkondensator (CF), der am Ausgang der Tiefsetzstellereinheit (4) angeordnet ist, und einen im Filterstrompfad angeordneten Stromsensor (12), der dazu ausgebildet ist, den Filterkondensator-Strom (iCF) zu messen; oder eine Anzahl von Filterkondensatoren (CF1, CF2, CF3), die am Ausgang des Wechselrichters (7) angeordnet sind, und eine entsprechende Anzahl von Stromsensoren (12a, 12b, 12c), wobei die Stromsensoren (12a, 12b, 12c) jeweils dazu ausgebildet sind, einen zugehörigen Filterkondensator-Strom (iCF1, iCF2, iCF3) zu messen,
- eine Reglereinheit (8), die dazu ausgebildet ist, in Abhängigkeit von dem gemessenen Filterkondensator-Strom (iCF) oder den gemessenen Filterkondensator-Strömen (iCF1, iCF2, iCF3) und in Abhängigkeit von gemessenen Phasenausgangsströmen (iAC1, iAC2, iAC3), die mittels des Wechselrichters (7) in das Drehstromnetz (3) eingespeist werden, den ersten Tiefsetzsteller (5) und den zweiten Tiefsetzsteller (6) derart anzusteuern, dass der erste Tiefsetzsteller (5) und der zweite Tiefsetzsteller (6) zu gleichen Teilen zu einem Ausgangsstrom (iZK) der Tiefsetzstellereinheit (4) beitragen.

2. Netzrückspeiseeinheit (1, 1') nach Anspruch 1, **dadurch gekennzeichnet, dass**
- die Reglereinheit (8) aufweist:
- einen Zwischenkreisspannungsregler (26), der dazu ausgebildet ist, eine Zwischenkreisspannung (UG) auf einen Sollwert (UGsoll) zu regeln, wobei der Zwischenkreisspannungsregler (26) einen Ausgangsstrom-Sollwert (iZKsoll) der Tiefsetzstellereinheit (4) als Stellgröße ausgibt,
- einen Tiefsetzstellereinheit-Stromregler (9), der dazu ausgebildet ist, in Abhängigkeit von einer Differenz zwischen dem Ausgangsstrom-Sollwert (iZKsoll) der Tiefsetzstellereinheit (4) und dem Ausgangsstrom (iZK) der Tiefsetzstellereinheit (4) und in Abhängigkeit von einem Symmetriersignal (ΔiL) ein erstes Strom-Stellsignal (m1) zu erzeugen und ein zweites Strom-Stellsignal (m2) zu erzeugen, wobei das erste Strom-Stellsignal (m1) einen Ausgangsstrom des ersten Tiefsetzstellers (5) beeinflusst und das zweite Strom-Stellsignal (m2) einen Ausgangsstrom des zweiten Tiefsetzstellers (6) beeinflusst, und
- eine Symmetriersignal-Erzeugungseinheit (13, 14), die dazu ausgebildet ist, das Symmetriersignal (ΔiL) in Abhängigkeit von dem Filterkondensator-Strom (iCF) derart zu erzeugen, dass das Symmetriersignal (ΔiL) davon abhängig ist, zu welchen Teilen der erste Tiefsetzsteller (5) und der zweite Tiefsetzsteller (6) zum Ausgangsstrom (iZK) der Tiefsetzstellereinheit (4) beitragen.

3. Netzrückspeiseeinheit (1, 1') nach Anspruch 2, **dadurch gekennzeichnet, dass**
- der erste Tiefsetzsteller (5) und der zweiten Tiefsetzsteller (6) jeweils mindestens ein Halbleiterschaltmittel (TS1o, TS1u; TS2o, TS2u) aufweisen, und
- die Reglereinheit (8) aufweist:
- eine erste PWM-Erzeugungseinheit (10), wobei die erste PWM-Erzeugungseinheit (10) dazu ausgebildet ist, in Abhängigkeit von dem ersten Strom-Stellsignal (m1) ein erstes pulsweitenmoduliertes Ansteuersignal (PWM1) für das mindestens eine Halbleiterschaltmittel (TS1o, TS1u) des ersten Tiefsetzstellers (5) zu erzeugen, und
- eine zweite PWM-Erzeugungseinheit (11), wobei die zweite PWM-Erzeugungseinheit (11) dazu ausgebildet ist, ein zweites pulsweitenmoduliertes Ansteuersignal (PWM2) für das mindestens eine Halbleiterschaltmittel (TS2o, TS2u) des zweiten Tiefsetzstellers (6) in Abhängigkeit von dem zweiten Strom-Stellsignal (m2) zu erzeugen,
- wobei die Symmetriersignal-Erzeugungseinheit aufweist:
- einen mit dem Stromsensor (12) wirkverbundenen Komparator (13), der dazu ausgebildet ist, ein Komparatorsignal (iC_comp) mit einem ersten logischen Zustand auszugeben, wenn der Filterkondensator-Strom (iCF) größer als ein oberer Schwellenwert ist, und das Komparatorsignal (iC_comp) mit einem zweiten logischen Zustand auszugeben, wenn der Filterkondensator-Strom (iCF) kleiner als ein unterer Schwellenwert ist, und
- eine Logikeinheit (14) mit mindestens einem Logikgatter (15, 16), mindestens einem Integrierglied (17, 18) und/oder mindestens einem Abtastglied (19), wobei die Logikeinheit (14) mit dem Komparatorsignal (iC_comp) und den pulsweitenmodulierten Ansteuersignalen (PWM1, PWM2) beaufschlagt ist und dazu ausgebildet ist, das Symmetriersignal (ΔiL) in Abhängigkeit von dem Komparatorsignal (iC_comp) und den pulsweitenmodulierten Ansteuersignalen (PWM1, PWM2) zu erzeugen.

4. Netzrückspeiseeinheit (1, 1') nach einem der vorhergehenden Ansprüche, **dadurch gekennzeichnet, dass**
- der erste Tiefsetzsteller (5) und der zweite Tiefsetzsteller (6) jeweils eine erste Kommutierungszelle (20) und ein zweite Kommutierungszelle (21) aufweisen, wobei die ersten Kommutierungszellen (20) einen Kondensator (C1o, C2o), eine Diode (D1o, D2o) und ein Halbleiterschaltmittel (TS1o, TS2o) aufweisen, wobei die zweiten Kommutierungszellen (21) einen Kondensator (C1u, C2u), eine Diode (D1u, D2u) und ein Halbleiterschaltmittel (TS1u, TS2u) aufweisen, wobei der Kondensator (C1o, C2o) der ersten Kommutierungszellen (20) und der Kondensator (C1u, C2u) der zweiten Kommutierungszellen (21) in Reihe zwischen Eingangsanschlusspole (UG+, UG-) der Tiefsetzstellereinheit (4) eingeschleift sind, wobei die Reglereinheit (8) eine Spannungs-Symmetriereinheit (22, 23, 24, 25) aufweist, die dazu ausgebildet ist, das Halbleiterschaltmittel (TS1o, TS2o) der ersten Kommutierungszellen (20) und das Halbleiterschaltmittel (TS1u, TS2u) der zweiten Kommutierungszellen (21) derart anzusteuern, dass sich an dem Kondensator (C1o, C2o) der ersten Kommutierungszellen (20) und dem Kondensator (C1u, C2u) der zweiten Kommutierungszellen (21) identische Spannungen einstellen.

5. Netzrückspeiseeinheit (1, 1') nach einem der vorhergehenden Ansprüche, **gekennzeichnet durch**
- eine Ausgangsstrom-Bestimmungseinheit (27, 27'), die dazu ausgebildet ist, in Abhängigkeit von dem Filterkondensator-Strom (iCF) oder den Filterkondensator-Strömen (iCF1, iCF2, iCF3) und in Abhängigkeit von Phasenausgangsströmen (iAC1, iAC2, iAC3), die mittels des Wechselrichters (7) in das Drehstromnetz (3) eingespeist werden, den Ausgangsstrom (iZK) der Tiefsetzstellereinheit (4) zu ermitteln.

6. Netzrückspeiseeinheit (1) nach Anspruch 5, **dadurch gekennzeichnet, dass**
- die Ausgangsstrom-Bestimmungseinheit (27) aufweist:
- eine Auswahleinheit (29), die mit den Phasenausgangsströmen (iAC1, iAC2, iAC3) und einem Auswahlsignal (PS) beaufschlagt ist und die dazu ausgebildet ist, in Abhängigkeit von dem Auswahlsignal (PS) einen der Phasenausgangsströme auszugeben, und
- einen Summierer (28), der mit dem Filterkondensator-Strom (iCF) und dem von der Auswahleinheit (29) ausgegebenen Phasenausgangsstrom beaufschlagt ist und der dazu ausgebildet ist, den Filterkondensator-Strom (iCF) und den von der Auswahleinheit (29) ausgegebenen Phasenausgangsstrom zu summieren, wobei die sich ergebende Summe den Ausgangsstrom (iZK) bildet.

7. Netzrückspeiseeinheit (1') nach Anspruch 6, **dadurch gekennzeichnet, dass**
- die Ausgangsstrom-Bestimmungseinheit (27') aufweist:
- eine erste Auswahleinheit (31), die mit den Phasenausgangsströmen (iAC1, iAC2, iAC3) und einem Auswahlsignal (PS) beaufschlagt ist und die dazu ausgebildet ist, in Abhängigkeit von dem Auswahlsignal (PS) einen der Phasenausgangsströme auszugeben,
- eine zweite Auswahleinheit (30), die mit den Filterkondensator-Strömen (iCF1, iCF2, iCF3) und dem Auswahlsignal (PS) beaufschlagt ist und die dazu ausgebildet ist, in Abhängigkeit von dem Auswahlsignal (PS) einen der Filterkondensator-Ströme auszugeben, und
- einen Summierer (32), der mit dem von der ersten Auswahleinheit (31) ausgegebenen Phasenausgangsstrom und mit dem von der zweiten Auswahleinheit (30) ausgegebenen Filterkondensator-Strom beaufschlagt ist und der dazu ausgebildet ist, den ausgewählten Phasenausgangsstrom und den ausgewählten Filterkondensator-Strom zu summieren, wobei die sich ergebende Summe den Ausgangsstrom (iZK) bildet.

8. Elektrisches Antriebssystem, aufweisend:
- mindestens einen elektrischen Antrieb,
- mindestens einen Frequenzumrichter zum Ansteuern des elektrischen Antriebs, wobei der Frequenzumrichter einen Zwischenkreis aufweist und/oder mit einem Zwischenkreis elektrisch gekoppelt ist, und
- eine mit dem Zwischenkreis und einem Drehstromnetz (3) gekoppelte Netzrückspeiseeinheit (1, 1') nach einem der vorhergehenden Ansprüche.

## Claims

1. Network feedback unit (1, 1'), which is designed to feed electrical energy from a voltage intermediate circuit (2) into a three-phase network (3), wherein the network feedback unit (1, 1') comprises:
- a buck converter unit (4) comprising a first buck converter (5) and a second buck converter (6), wherein the first buck converter (5) and the second buck converter (6) are connected in parallel and wherein the input side of each of which can be electrically coupled to the voltage intermediate circuit (2),
wherein the network feedback unit (1, 1') is designed to clock the first buck converter (5) and the second buck converter (6) based on pulse-width modulation, in a manner staggered by 180 degrees,
- an inverter (7), the input side of which is electrically coupled to an output of the buck converter unit (4) and the output side of which can be electrically coupled to the three-phase network (3),
- a filter capacitor (CF) which is arranged at the output of the buck converter unit (4), and a current sensor (12) arranged in the filter current path, which current sensor is designed to measure the filter capacitor current (iCF); or a number of filter capacitors (CF1, CF2, CF3) at the output of the inverter (7), and a corresponding number of current sensors (12a, 12b, 12c), wherein the current sensors (12a, 12b, 12c) are each designed to measure an associated filter capacitor current (iCF1, iCF2, iCF3),
- a controller unit (8), which is designed to drive the first buck converter (5) and the second buck converter (6) depending on the measured filter capacitor current (iCF) or the measured filter capacitor currents (iCF1, iCF2, iCF3) and depending on the measured phase output currents (iAC1, iAC2, iAC3), which are fed into the three-phase network (3) by means of the inverter (7), in such a way that the first buck converter (5) and the second buck converter (6) contribute in equal parts to an output current (iZK) of the buck converter unit (4).

2. Network feedback unit (1, 1') according to claim 1, **characterized in that**
- the controller unit (8) comprises:
- an intermediate circuit voltage controller (26), which is designed to regulate an intermediate circuit voltage (UG) to a setpoint value (UGsoll), wherein the intermediate circuit voltage controller (26) outputs an output current setpoint value (iZKsoll) of the buck converter unit (4) as a manipulated variable,
- a buck converter unit current controller (9), which is designed, depending on a difference between the output current setpoint value (iZKsoll) of the buck converter unit (4) and the output current (iZK) of the buck converter unit (4) and depending on a balancing signal (ΔiL), to generate a first current setting signal (m1) and to generate a second current setting signal (m2), wherein the first current setting signal (m1) influences an output current of the first buck converter (5) and the second current setting signal (m2) influences an output current of the second buck converter (6), and
- a balancing signal generation unit (13, 14), which is designed to generate the balancing signal (ΔiL) depending on the filter capacitor current (iCF) in such a way that the balancing signal (ΔiL) is dependent on the parts in which the first buck converter (5) and the second buck converter (6) contribute to the output current (iZK) of the buck converter unit (4).

3. Network feedback unit (1, 1') according to claim 2, **characterized in that**
- the first buck converter (5) and the second buck converter (6) each have at least one semiconductor switching means (TS1o, TS1u; TS2o, TS2u), and
- the controller unit (8) comprises:
- a first PWM generation unit (10), wherein the first PWM generation unit (10) is designed to generate a first pulse-width-modulated drive signal (PWM1) for the at least one semiconductor switching means (TS1o, TS1u) of the first buck converter (5) depending on the first current setting signal (m1), and
- a second PWM generation unit (11), wherein the second PWM generation unit (11) is designed to generate a second pulse-width-modulated drive signal (PWM2) for the at least one semiconductor switching means (TS2o, TS2u) of the second buck converter (6) depending on the second current setting signal (m2),
- wherein the balancing signal generation unit comprises:
- a comparator (13), which is operatively connected to the current sensor (12), which comparator is designed to output a comparator signal (iC_comp) having a first logic state when the filter capacitor current (iCF) is greater than an upper threshold value and to output the comparator signal (iC_comp) having a second logic state when the filter capacitor current (iCF) is lower than a lower threshold value, and
- a logic unit (14) having at least one logic gate (15, 16), at least one integrating element (17, 18) and/or at least one sampling element (19), wherein the logic unit (14) is supplied with the comparator signal (iC_comp) and the pulse-width-modulated drive signals (PWM1, PWM2) and is designed to generate the balancing signal (ΔiL) depending on the comparator signal (iC_comp) and the pulse-width-modulated drive signals (PWM1, PWM2).

4. Network feedback unit (1, 1') according to any of the preceding claims, **characterized in that**
- the first buck converter (5) and the second buck converter (6) each comprise a first commutation cell (20) and a second commutation cell (21), wherein the first commutation cell (20) comprises a capacitor (C1o, C2o), a diode (D1o, D2o) and a semiconductor switching means (TS1o, TS2o), wherein the second commutation cell (21) comprises a capacitor (C1u, C2u), a diode (D1u, D2u) and a semiconductor switching means (TS1u, TS2u), wherein the capacitor (C1o, C2o) of the first commutation cell (20) and the capacitor (C1u, C2u) of the second commutation cell (21) are looped in in series between input connection poles (UG+, UG-) of the buck converter unit (4), wherein the controller unit (8) comprises a voltage balancing unit (22, 23, 24, 25), which is designed to drive the semiconductor switching means (TS1o, TS2o) of the first commutation cell (20) and the semiconductor switching means (TS1u, TS2u) of the second commutation cell (21) in such a way that identical voltages are set at the capacitor (C1o, C2o) of the first commutation cell (20) and the capacitor (C1u, C2u) of the second commutation cell (21).

5. Network feedback unit (1, 1') according to any of the preceding claims, **characterized by**
- an output current determination unit (27, 27'), which is designed to identify the output current (iZK) of the buck converter unit (4) depending on the filter capacitor current (iCF) or the filter capacitor currents (iCF1, iCF2, iCF3) and depending on phase output currents (iAC1, iAC2, iAC3), which are fed into the three-phase network (3) by means of the inverter (7).

6. Network feedback unit (1) according to claim 5, **characterized in that**
- the output current determination unit (27) comprises:
- a selection unit (29), which is supplied with the phase output currents (iAC1, iAC2, iAC3) and a selection signal (PS) and which is designed to output one of the phase output currents depending on the selection signal (PS), and
- a summer (28), which is supplied with the filter capacitor current (iCF) and the phase output current output by the selection unit (29) and which is designed to sum the filter capacitor current (iCF) and the phase output current output by the selection unit (29), wherein the resulting sum forms the output current (iZK).

7. Network feedback unit (1') according to claim 6, **characterized in that**
- the output current determination unit (27') comprises:
- a first selection unit (31), which is supplied with the phase output currents (iAC1, iAC2, iAC3) and a selection signal (PS) and which is designed to output one of the phase output currents depending on the selection signal (PS),
- a second selection unit (30), which is supplied with the filter capacitor currents (iCF1, iCF2, iCF3) and the selection signal (PS) and which is designed to output one of the filter capacitor currents depending on the selection signal (PS), and
- a summer (32), which is supplied with the phase output current output by the first selection unit (31) and with the filter capacitor current output by the second selection unit (30) and which is designed to sum the selected phase output current and the selected filter capacitor current, wherein the resulting sum forms the output current (iZK).

8. Electrical drive system, having:
- at least one electrical drive,
- at least one frequency converter for driving the electrical drive, wherein the frequency converter has an intermediate circuit and/or is electrically coupled to an intermediate circuit, and
- a network feedback unit (1, 1') according to any of the preceding claims, which is coupled to the intermediate circuit and a three-phase network (3).

## Revendications

1. Unité de récupération d'énergie (1, 1') qui est conçue pour injecter l'énergie électrique d'un circuit intermédiaire de tension (2) dans un réseau électrique triphasé (3), dans laquelle l'unité de récupération d'énergie (1, 1') comprend :
- une unité à convertisseurs abaisseurs (4) comprenant un premier convertisseur abaisseur (5) et un second convertisseur abaisseur (6), dans laquelle le premier convertisseur abaisseur (5) et le second convertisseur abaisseur (6) sont connectés en parallèle et peuvent chacun être couplés électriquement du côté entrée au circuit intermédiaire de tension (2),
dans laquelle l'unité de récupération d'énergie (1, 1') est conçue pour cadencer le premier convertisseur abaisseur (5) et le second convertisseur abaisseur (6) de manière décalée de 180 degrés sur la base d'une modulation de largeur d'impulsion,
- un onduleur (7) qui est couplé électriquement du côté entrée à une sortie de l'unité à convertisseurs abaisseurs (4) et qui peut être couplé électriquement du côté sortie au réseau triphasé (3),
- un condensateur de filtrage (CF) qui est disposé à la sortie de l'unité à convertisseurs abaisseurs (4), et un capteur de courant (12) qui est disposé sur le trajet de courant de filtrage et qui est conçu pour mesurer le courant de condensateur de filtrage (iCF) ; ou un certain nombre de condensateurs de filtrage (CF1, CF2, CF3) qui sont disposés à la sortie de l'onduleur (7) et un nombre correspondant de capteurs de courant (12a, 12b, 12c), dans laquelle les capteurs de courant (12a, 12b, 12c) sont chacun conçus pour mesurer un courant de condensateur de filtrage (iCF1, iCF2, iCF3) associé,
- une unité de régulation (8) qui est conçue pour commander, en fonction du courant de condensateur de filtrage (iCF) mesuré ou des courants de condensateur de filtrage (iCF1, iCF2, iCF3) mesurés et en fonction des courants de sortie de phase (iAC1, iAC2, iAC3) mesurés injectés dans le réseau triphasé (3) au moyen de l'onduleur (7), le premier convertisseur abaisseur (5) et le second convertisseur abaisseur (6) de manière à ce que le premier convertisseur abaisseur (5) et le second convertisseur abaisseur (6) contribuent de manière égale à un courant de sortie (iZK) de l'unité à convertisseurs abaisseurs (4).

2. Unité de récupération d'énergie (1, 1') selon la revendication 1, **caractérisée en ce que**
- l'unité de régulation (8) comprend :
- un régulateur de tension de circuit intermédiaire (26) conçu pour réguler une tension de circuit intermédiaire (UG) à une valeur de consigne (UGsoll), dans laquelle le régulateur de tension de circuit intermédiaire (26) délivre une valeur de consigne de courant de sortie (iZKsoll) de l'unité à convertisseurs abaisseurs (4) en tant que valeur de réglage,
- un régulateur de courant d'unité à convertisseurs abaisseurs (9) qui est conçu pour générer un premier signal de réglage de courant (m1) et pour générer un second signal de réglage de courant (m2) en fonction d'une différence entre la valeur de consigne de courant de sortie (iZKsoll) de l'unité à convertisseurs abaisseurs (4) et le courant de sortie (iZK) de l'unité à convertisseurs abaisseurs (4) et en fonction d'un signal d'équilibrage (ΔiL), dans laquelle le premier signal de réglage de courant (m1) affecte un courant de sortie du premier convertisseur abaisseur (5) et le second signal de réglage de courant (m2) affecte un courant de sortie du second convertisseur abaisseur (6), et
- une unité de génération de signal d'équilibrage (13, 14) qui est conçue pour générer le signal d'équilibrage (ΔiL) en fonction du courant de condensateur de filtrage (iCF) de manière à ce que le signal d'équilibrage (ΔiL) dépende des proportions selon lesquelles le premier convertisseur abaisseur (5) et le second convertisseur abaisseur (6) contribuent au courant de sortie (iZK) de l'unité à convertisseurs abaisseurs (4).

3. Unité de récupération d'énergie (1, 1') selon la revendication 2, **caractérisée en ce que**
- le premier convertisseur abaisseur (5) et le second convertisseur abaisseur (6) comprennent chacun au moins un moyen de commutation à semi-conducteurs (TS1o, TS1u ; TS2o, TS2u), et
- l'unité de régulation (8) comprend :
- une première unité de génération PWM (10), dans laquelle la première unité de génération PWM (10) est conçue pour générer un premier signal de commande modulé en largeur d'impulsion (PWM1) pour ledit au moins un moyen de commutation à semi-conducteurs (TS1o, TS1u) du premier convertisseur abaisseur (5) en fonction du premier signal de réglage de courant (m1), et
- une seconde unité de génération PWM (11), dans laquelle la seconde unité de génération PWM (11) est conçue pour générer un second signal de commande modulé en largeur d'impulsion (PWM2) pour ledit au moins un moyen de commutation à semi-conducteurs (TS2o, TS2u) du second convertisseur abaisseur (6) en fonction du second signal de réglage de courant (m2),
- dans laquelle l'unité de génération de signal d'équilibrage comprend :
- un comparateur (13) fonctionnellement relié au capteur de courant (12), qui est conçu pour délivrer un signal de comparateur (iC_comp) dans un premier état logique lorsque le courant de condensateur de filtrage (iCF) est supérieur à une valeur de seuil supérieure, et pour délivrer le signal de comparateur (iC_comp) dans un second état logique, lorsque le courant de condensateur de filtrage (iCF) est inférieur à une valeur de seuil inférieure, et
- une unité logique (14) comportant au moins une porte logique (15, 16), au moins un circuit d'intégration (17, 18) et/ou au moins un circuit d'échantillonnage (19), dans laquelle l'unité logique (14) reçoit le signal de comparateur (iC_comp) et les signaux de commande modulés en largeur d'impulsion (PWM1, PWM2) et est conçue pour générer le signal d'équilibrage (ΔiL) en fonction du signal de comparateur (iC_comp) et des signaux de commande modulés en largeur d'impulsion (PWM1, PWM2).

4. Unité de récupération d'énergie (1, 1') selon l'une des revendications précédentes, **caractérisée en ce que**
- le premier convertisseur abaisseur (5) et le second convertisseur abaisseur (6) comprennent chacun une première cellule de commutation (20) et une seconde cellule de commutation (21), dans laquelle les premières cellules de commutation (20) comprennent un condensateur (C1o, C2o), une diode (D1o, D2o) et un moyen de commutation à semi-conducteurs (TS1o, TS2o), dans laquelle les secondes cellules de commutation (21) comprennent un condensateur (C1u, C2u), une diode (D1u, D2u) et un moyen de commutation à semi-conducteurs (TS1u, TS2u), dans laquelle le condensateur (C1o, C2o) des premières cellules de commutation (20) et le condensateur (C1u, C2u) des secondes cellules de commutation (21) sont connectés en série entre les pôles des bornes d'entrée (UG+, UG-) de l'unité à convertisseurs abaisseur (4), dans laquelle l'unité de régulation (8) comprend une unité d'équilibrage de tension (22, 23, 24, 25) qui est conçue pour commander le moyen de commutation à semi-conducteurs (TS1o, TS2o) des premières cellules de commutation (20) et le moyen de commutation à semi-conducteurs (TS1u, TS2u) des secondes cellules de commutation (21) de manière à régler des tensions identiques au niveau du condensateur (C1o, C2o) des premières cellules de commutation (20) et du condensateur (C1u, C2u) des secondes cellules de commutation (21).

5. Une unité de récupération d'énergie (1, 1') selon l'une des revendications précédentes, **caractérisée par**
- une unité de détermination de courant de sortie (27, 27') qui est conçue pour déterminer le courant de sortie (iZK) de l'unité à convertisseurs abaisseurs (4) en fonction du courant de condensateur de filtrage (iCF) ou des courants de condensateur de filtrage (iCF1, iCF2, iCF3) et en fonction de courants de sortie de phase (iAC1, iAC2, iAC3) qui sont injectés dans le réseau triphasé (3) au moyen de l'onduleur (7).

6. Unité de récupération d'énergie (1) selon la revendication 5, **caractérisée en ce que**
- l'unité de détermination de courant de sortie (27) comprend :
- une unité de sélection (29) à laquelle sont appliqués les courants de sortie de phase (iAC1, iAC2, iAC3) et un signal de sélection (PS) et qui est conçue pour délivrer l'un des courants de sortie de phase en fonction du signal de sélection (PS), et
- un sommateur (28) auquel sont appliqués le courant de condensateur de filtrage (iCF) et le courant de sortie de phase délivré par l'unité de sélection (29) et qui est conçu pour additionner le courant de condensateur de filtrage (iCF) et le courant de sortie de phase délivré par l'unité de sélection (29), dans laquelle la somme obtenue constitue le courant de sortie (iZK).

7. Unité de récupération d'énergie (1') selon la revendication 6, **caractérisée en ce que**
- l'unité de détermination de courant de sortie (27') comprend :
- une première unité de sélection (31) à laquelle sont appliqués les courants de sortie de phase (iAC1, iAC2, iAC3) et un signal de sélection (PS) et qui est conçue pour délivrer l'un des courants de sortie de phase en fonction du signal de sélection (PS),
- une seconde unité de sélection (30) à laquelle sont appliqués les courants de condensateur de filtrage (iCF1, iCF2, iCF3) et le signal de sélection (PS) et qui est conçue pour délivrer l'un des courants de condensateur de filtrage en fonction du signal de sélection (PS), et
- un sommateur (32) auquel est appliqué le courant de sortie de phase délivré par la première unité de sélection (31) et le courant de condensateur de filtrage délivré par la seconde unité de sélection (30) et qui est conçu pour additionner le courant de sortie de phase sélectionné et le courant de condensateur de filtrage sélectionné, dans laquelle la somme obtenue constitue le courant de sortie (iZK).

8. Système d'entraînement électrique, comprenant :
- au moins un entraînement électrique,
- au moins un convertisseur de fréquence destiné à commander l'entraînement électrique, dans lequel le convertisseur de fréquence comporte un circuit intermédiaire et/ou est couplé électriquement à un circuit intermédiaire, et
- une unité de récupération d'énergie (1, 1') selon l'une des revendications précédentes, couplée au circuit intermédiaire et à un réseau triphasé (3).
